# EUROPEAN PATENT APPLICATION

(11) **EP 4 593 522 A1**
(43) Date of publication of application: **30.07.2025**
(21) Application number: 25150449.4
(22) Date of filing: 07.01.2025
(51) Int. Cl.: H04W 84/12, H04W 72/27, H04W 88/10

(54) **COVERAGE HOLE MITIGATION**

(30) Priority: 24.01.2024 GB 202400914
(71) Applicant: Nokia Technologies Oy, 02610 Espoo (FI)
(72) Inventor: WILHELMI, Francisco, Gerlingen (DE); GALATI GIORDANO, Lorenzo, Stuttgart (DE); FONTANESI, Gianluca Attilio, Stuttgart (DE)
(74) Representative: Nokia EPO representatives

(57) **Abstract**

There is herein disclosed an apparatus comprising means for determining that a first access point and a second access point are in a coordination agreement and that a device is in a first wireless communication session with the first access point and determining that the device is positioned in a coverage hole of the first access point. The apparatus further comprises means for transmitting, to the second access point, a request for the second access point to indicate whether it is suitable for providing a second wireless communication session with the device and means for receiving, from the second access point, an indication that the second access point is suitable for providing a second wireless communication session with the device. The apparatus further comprises means for negotiating an authorisation of the second wireless communication session between the device and the second access point and means for authorising the second wireless communication session between the device and the second access point.

## Description

### Field

Example embodiments may relate to systems, methods and/or computer programs for wireless networks. In particular, example embodiments relate to coverage hole mitigation in wireless networks.

### Background

In computer networking, a wireless Access Point (AP) is a networking hardware device that allows a Wi-Fi (IEEE 802.11 network) compatible client device to wirelessly connect to a wired network and to other client devices. The AP usually connects to a router (directly or indirectly via a wired network) as a standalone device, but the AP can also be an integral component of the router itself. Several nodes may also work in coordination, either through direct wired or wireless connections in a Wireless Local Area Network (WLAN). The APs, in some WLAN implementations, may in the future work in concert in a scheme called Multi-Access Point Coordination (MAPC). Two or more APs can coordinate some operations. Such coordination can include mitigating coverage holes of APs.

Coverage holes have a detrimental effect on a user's Wi-Fi experience, as they lead to radio link failures when users move to poor coverage areas. Thus, detecting and mitigating the effects of coverage holes is important in Wi-Fi and wireless networks in general.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising means for: determining that a first access point and a second access point are in a coordination agreement and that a device is in a first wireless communication session with the first access point; determining that the device is positioned in a coverage hole of the first access point; transmitting, to the second access point, a request for the second access point to indicate whether it is suitable for providing a second wireless communication session with the device; receiving, from the second access point, an indication that the second access point is suitable for providing a second wireless communication session with the device; negotiating an authorisation of the second wireless communication session between the device and the second access point; and authorising the second wireless communication session between the device and the second access point.

The apparatus may be the first access point.

The means for determining that a first access point and a second access point are in the coordination agreement may comprise means for determining that the first access point and second access point are part of a multi-access point coordination, MAPC, group.

The request for the second access point to indicate whether it is suitable for providing a second wireless communication session with the device may comprise a request to indicate whether device is located within a coverage range for the second access point. The indication that the second access point is suitable for providing a second wireless communication session with the device may comprise an indication that the device is located within the coverage range for the second access point.

The indication that the second access point is suitable for providing a second wireless communication session with the device may comprise information regarding the second access point's capacity for hosting a second wireless communication session between the device and the second access point.

The apparatus may further comprise means for reviewing the information and determining whether to authorise the second wireless communication session based on the information.

The information regarding the second access point's capacity for hosting a second wireless communication session may comprise at least one of the following: at least one radio band supported by the second access point; a location of the second access point relative to the device; a received signal strength indicator, RSSI, measurement; at least one condition under which the second access point can host the second wireless communication session; a bandwidth allocation which can be provided by the second access point for hosting the second wireless communication session.

The means for negotiating the authorisation of the second wireless communication session between the device and the second access point may comprise: means for comparing the information received regarding the second access point's capacity for hosting a second wireless communication session to a threshold value; and means for authorising, upon determining that the information meets the threshold value, the second wireless communication session.

The means for negotiating the authorisation of the second wireless communication session between the device and the second access point may comprise means for verifying that the second access point is in communication with the device.

The means for verifying that the second access point is in communication with the device may comprise at least one of the following: means for receiving, from the second access point, at least one piece of information to indicate that the second access point is in communication with the device; or means for transmitting, to the second access point, at least one piece of information to indicate that the second access point is in communication with the device.

The apparatus may further comprise means for determining that the second wireless communication session between the device and second access point has commenced. The apparatus may further comprise means for monitoring the second wireless communication session between the device and second access point. The apparatus may further comprise means for determining that the second wireless communication session between the device and the second access point has been terminated.

The apparatus may further comprise means for determining that the device is no longer positioned in the coverage hole of the first access point, comprising receiving a reassociation request from the device.

According to a second aspect, there is described an apparatus comprising means for: determining that a first access point and a second access point are in a coordination agreement and that a device is in a first wireless communication session with the first access point; determining that the device is positioned in a coverage hole of the first access point, based on receiving at least a first signal from the device; transmitting, to the first access point, an indication that the second access point is suitable for providing a second wireless communication session with the device; negotiating, with the first access point, an authorisation of the second wireless communication session between the device and the second access point; and receiving the authorisation, from the first access point, for the second wireless communication session between the device and the second access point.

The apparatus may be the second access point.

The at least first signal may comprise a probe request message.

The means for determining that a first access point and a second access point are in the coordination agreement, may comprise means for determining that the first access point and second access point are part of a multi-access point coordination, MAPC, group.

The indication that the second access point is suitable for providing a second wireless communication session with the device may comprise an indication that the device is located within the coverage range for the second access point.

The indication that the second access point is suitable for providing a second wireless communication session with the device may comprise information regarding the second access point's capacity for hosting a second wireless communication session between the device and the second access point.

The information regarding the second access point's capacity for hosting a second wireless communication session comprises at least one of the following: at least one radio band supported by the second access point; a location of the second access point relative to the device; a received signal strength indicator, RSSI, measurement; at least one condition under which the second access point can host the second wireless communication session and a bandwidth allocation which can be provided by the second access point for hosting the second wireless communication session.

The apparatus may further comprise means for verifying that the device is authenticated by and/or is associated with the first access point.

The means for verifying that the device is authenticated by and/or is associated with the first access point, comprises at least one of: means for receiving, from the first access point, at least one piece of information to indicate that the first access point is in communication with the device; or means for transmitting, to the first access point, at least one piece of information to indicate that the second access point is in communication with the device.

The apparatus may further comprise means for commencing the second wireless communication session between the device and second access point;
means for monitoring the second wireless communication session between the device and second access point. The apparatus may further comprise means for terminating the second wireless communication session between the device and second access point.

The apparatus may further comprise means for receiving, from the first access point and/or the device, a disassociation request to end the second wireless communication session. The apparatus may further comprise means for ending the second wireless communication session between the device and second access point.

According to a third aspect, there is described an apparatus comprising means for: identifying that a device is in a first wireless communication session with the first access point; identifying that the device is positioned in a coverage hole of the first access point; transmitting, to a second access point, at least a first signal, wherein the first signal comprises a probe request for a second wireless communication session between the device and the second access point; receiving, from the second access point, confirmation that the first access point and the second access point form part of a coordination agreement and that the second access point is suitable for providing the second wireless communication session; and commencing the second wireless communication session between the device and second access point.

The apparatus may be the device.

The apparatus may further comprise means for monitoring whether the device is still positioned in a coverage hole of the first access point, comprising means for scanning to receive a least one signal from the first access point. The apparatus may further comprise means for sending an association or reassociation request from the device to the first access point.

According to a fourth aspect, there is described a method comprising: determining that a first access point and a second access point are in a coordination agreement and that a device is in a first wireless communication session with the first access point; determining that the device is positioned in a coverage hole of the first access point; transmitting, to the second access point, a request for the second access point to indicate whether it is suitable for providing a second wireless communication session with the device; receiving, from the second access point, an indication that the second access point is suitable for providing a second wireless communication session with the device; negotiating an authorisation of the second wireless communication session between the device and the second access point; and authorising the second wireless communication session between the device and the second access point.

According to a fifth aspect, there is described a method comprising: determining that a first access point and a second access point are in a coordination agreement and that a device is in a first wireless communication session with the first access point; determining that the device is positioned in a coverage hole of the first access point, based on receiving at least a first signal from the device; transmitting, to the first access point, an indication that the second access point is suitable for providing a second wireless communication session with the device; negotiating, with the first access point, an authorisation of the second wireless communication session between the device and the second access point; and receiving the authorisation, from the first access point, for the second wireless communication session between the device and the second access point.

According to a sixth aspect, there is described a method comprising: identifying that a device is in a first wireless communication session with the first access point; identifying that the device is positioned in a coverage hole of the first access point; transmitting, to a second access point, at least a first signal, wherein the first signal comprises a probe request for a second wireless communication session between the device and the second access point; receiving, from the second access point, confirmation that the first access point and the second access point form part of a coordination agreement and that the second access point is suitable for providing the second wireless communication session; and commencing the second wireless communication session between the device and second access point.

According to a seventh aspect, there is provided a computer program product comprising a set of instructions which, when executed on an apparatus, is configured to cause the apparatus to carry out the method of any preceding method definition.

According to a eighth aspect, there is provided a non-transitory computer readable medium comprising program instructions stored thereon for performing the method of any preceding method definition.

### Brief Description of the Drawings

Example embodiments will now be described by way of non-limiting example, with reference to the accompanying drawings, in which:
FIG. 1 shows, by way of example, a network architecture of a Wi-Fi communication system.
FIG. 2 shows, by way of example, a coverage hole.
FIG. 3 shows, by way of example, a coverage hole.
FIG. 4 shows, by way of example, a coverage hole mitigation procedure.
FIG. 5 shows, by way of example, a first method for coverage hole mitigation.
FIG. 6 shows, by way of example, a flow chart of a decision making process at a host AP.
FIG. 7 shows, by way of example, a flow chart of a decision making process at a visited AP.
FIG. 8 shows, by way of example, a negotiation and association sharing procedure.
FIG. 9 shows, by way of example, a flow chart of a decision making process at a device.
FIG. 10 shows, by way of example, a flow chart of a decision making process at a host AP.
FIG. 11 shows, by way of example, a second method for coverage hole mitigation.
FIG. 12 shows, by way of example, a flow chart of a decision making process at a visited AP.
FIG. 13 shows, by way of example, a flow chart of a decision making process at a host AP.
FIG. 14 shows, by way of example, a third method for coverage hole mitigation.
FIG. 15 shows, by way of example, a block diagram of an apparatus.

### Detailed Description

Coverage holes are a major source of customer complaints for Wi-Fi vendors and Internet Service Providers (ISP). Coverage holes are areas where APs or Base Stations (BSs) cannot provide an acceptable service to their associated users due to poor signal propagation, for example, as a result of the attenuation produced by the medium and physical obstacles.

Commercial Wi-Fi APs may include proprietary coverage hole detection and mitigation mechanisms, which are executed at the Radio Resource Management, RRM, level. The main drawback of the existing methods is that they perform coverage hole mitigation through transmit power adaptation, so that potentially detected holes are attempted to be solved by increasing the transmit power level to cover the maximum area possible and reach all devices which desire to connect to an AP. This approach can contribute to increasing the interference, as APs tend to use higher power, which can severely affect the performance in an Overlapping Basic Service Set (OBSS). Furthermore, APs can reach a limited coverage area, even if using the maximum power. Thus, the mitigation of coverage holes is not guaranteed, and an improved technique is required.

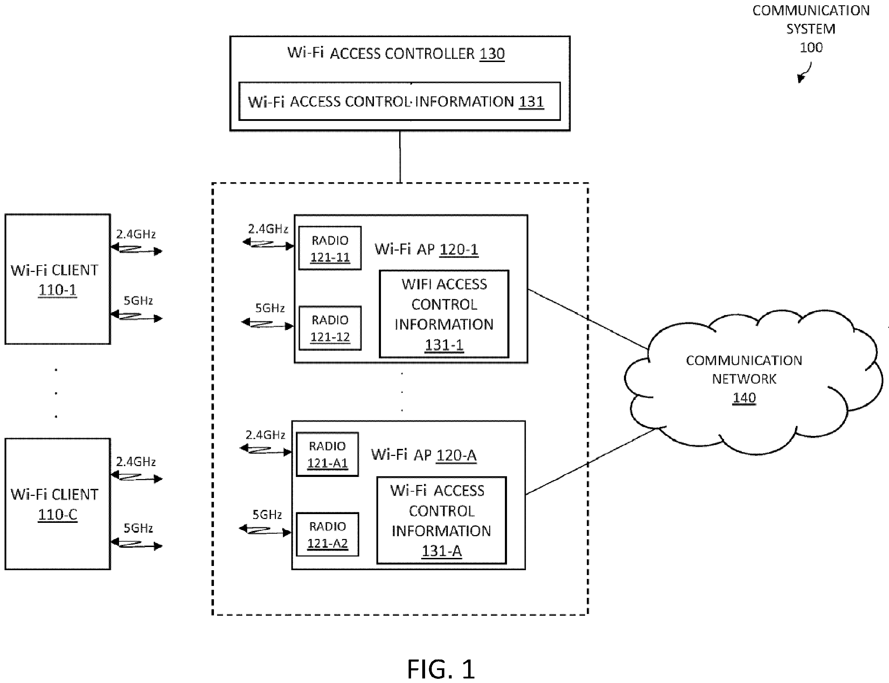

FIG. 1 depicts an example embodiment of a communication system 100 including Wi-Fi access points 120, Wi-Fi clients 110, and a controller 130 configured to control association of the Wi-Fi clients with the Wi-Fi access points. The communication system 100 of the example embodiment of FIG. 1 is one illustration of a possible Wi-Fi system provided for background information of the disclosure herein. The communication system 100 of FIG. 1 is not intended to provide a limitation on the disclosure.

The communication system 100 includes a set of Wi-Fi clients 110-1 to 110-C (collectively, Wi-Fi clients 110), a set of Wi-Fi access points (APs) 120-1 to 120-A (collectively, Wi-Fi APs 120), a Wi-Fi access controller 130, and a communication network 140. The Wi-Fi clients 110 may associate with the Wi-Fi APs 120, based on Wi-Fi access control functions supported by the Wi-Fi access controller 130, to obtain network access to the communication network 140. Alternatively, each Wi-Fi AP 120 may operate autonomously and/or independently. For example, each Wi-Fi AP 120 may have their own Wi-Fi access controller (not shown). The communication network 140 accessed by the Wi-Fi clients 110 via the Wi-Fi APs 120 may include any communications network(s) which may be utilized by Wi-Fi clients 110, such as public communication networks, private communication networks, or the like, as well as various combinations thereof (e.g., Internet-related networks, enterprise networks, data center networks, or the like, as well as various combinations thereof).

The Wi-Fi clients 110 include any devices which may associate with the Wi-Fi APs 120 to obtain network access to the communication network 140. The Wi-Fi clients 110 may support various IEEE 802.11 standards, such as one or more of 802.11 (Wi-Fi 0, 2.4GHz), 802.11b (Wi-Fi 1, 2.4GHz), 802.11a (Wi-Fi 2, 5GHz), 802.11g (Wi-Fi 3, 5GHz), 802.11n (Wi-Fi 4, 2.4/5GHz), 802.11ac (Wi-Fi 5, 5GHz), 802.11ax (Wi-Fi 6, 2.4/5/6GHz), 802.11b (Wi-Fi 1, 2.4GHz), 802.11be (Wi-Fi 7, 2.4/5/6GHz) or the like. The Wi-Fi clients 110 may support one or more Wi-Fi radio bands (e.g., single-band, dual-band, tri-band, and so forth) which may be used by the Wi-Fi clients 110 for communication with the Wi-Fi APs 120 (e.g., one or more of 2.4GHz, 5GHz, 6GHz, or the like). In the example of FIG. 1 for purposes of clarity, each of the Wi-Fi clients 110 is depicted as a dual-band device supporting the 2.4GHz band and the 5GHz band; however, it will be appreciated that Wi-Fi clients 110 may include single-band devices (e.g., supporting only one of 2.4GHz, 5GHz, 6GHz, or the like), multi-band devices supporting other numbers or combinations of Wi-Fi radio bands, or the like, as well as various combinations thereof. The Wi-Fi clients 110 may also be herein interchangeably referred to as "devices". For example, the Wi-Fi clients 110 / devices may include computers, smartphones, televisions, home control devices, appliances, Internet-of-Things (IoT) devices, and so forth.

The latest IEEE 802.11be standard has introduced an architecture whereby multiple bands can be operated concurrently by a single entity, called a multi-link device, MLD. The MLD communicates with both the Wi-Fi APs 120 and the Wi-Fi clients 110.

The Wi-Fi APs 120 are configured to support communications of the Wi-Fi clients 110 via the communication network 140. The Wi-Fi APs 120 may support various IEEE standards, such as one or more of 802.11 (Wi-Fi 0, 2.4GHz), 802.11b (Wi-Fi 1, 2.4GHz), 802.11a (Wi-Fi 2, 5GHz), 802.11g (Wi-Fi 3, 5GHz), 802.11n (Wi-Fi 4, 2.4/5GHz), 802.11ac (Wi-Fi 5, 5GHz), 802.11ax (Wi-Fi 6, 2.4/5/6GHz), 802.11b (Wi-Fi 1, 2.4GHz), 802.11be (Wi-Fi 7, 2.4/5/6GHz), or the like. The Wi-Fi APs 120 may support one or more Wi-Fi radio bands which may be used by the Wi-Fi clients 110 for communication with the Wi-Fi APs 120 (e.g., one or more of 2.4GHz, 5GHz, 6GHz, or the like). The Wi-Fi APs 120 each support a set of Wi-Fi radios 121 (illustratively, Wi-Fi AP 120-1 supports Wi-Fi radios 121-11 and 121-12 and Wi-Fi AP 120-A supports Wi-Fi radios 121-A1 and 121-A2) configured to support Wi-Fi-based communications of the Wi-Fi clients 110. In the example of FIG. 1 for purposes of clarity, each of the Wi-Fi APs 120 is depicted as a dual-band device supporting the 2.4GHz band and the 5GHz band; however, it will be appreciated that Wi-Fi APs 120 may include single-band devices (e.g., supporting only one of 2.4GHz, 5GHz, 6GHz, or the like), multi-band devices supporting other numbers or combinations of Wi-Fi radio bands, or the like, as well as various combinations thereof. The Wi-Fi APs 120 are configured to support control over association of Wi-Fi clients 110 with the Wi-Fi APs 120. The Wi-Fi APs are configured to support control over association of Wi-Fi clients 110 with the Wi-Fi APs 120 by receiving association requests from the Wi-Fi clients 110 in which the Wi-Fi clients 110 request association with particular Wi-Fi radio bands of the Wi-Fi APs 120 and the Wi-Fi APs 120 accept or deny the association requests for permitting or preventing association of the Wi-Fi clients 110 with the Wi-Fi APs 120. It will be appreciated that the Wi-Fi APs 120 also may be referred to herein as Wi-Fi routers.

The Wi-Fi access controller 130 is configured to support control over association of Wi-Fi clients 110 with Wi-Fi APs 120. The Wi-Fi access controller 130 may be configured to support control over association of Wi-Fi clients 110 with Wi-Fi APs 120 based on Wi-Fi access control information 131 which is determined by the Wi-Fi access controller 130 (illustrated as the Wi-Fi access control information 131 maintained on the Wi-Fi access controller 130) and provided by the Wi-Fi access controller 130 to the Wi-Fi APs 120 for use by the Wi-Fi APs 120 in controlling association of Wi-Fi clients 110 with the Wi-Fi APs 120. The Wi-Fi access control information 131 maintained on the Wi-Fi APs 120 may be used by the Wi-Fi APs 120 in handling association requests from the Wi-Fi clients 110, thereby enabling the Wi-Fi APs 120 to control association of Wi-Fi clients 110 with the Wi-Fi APs 120 and Wi-Fi radio bands of the Wi-Fi APs 120. In some Wi-Fi communication systems controlling of association may be directly done by the Wi-Fi AP 120 to which a Wi-Fi client 110 is trying to associate. In other Wi-Fi communication systems, controlling of association may be achieved through a centralized system (e.g., using 802.1x), where a server is in charge of managing user associations. In a centralized system, the Wi-Fi AP 120 may simply forward an association request to the server. The disclosure herein may be applied to both methods for controlling association.

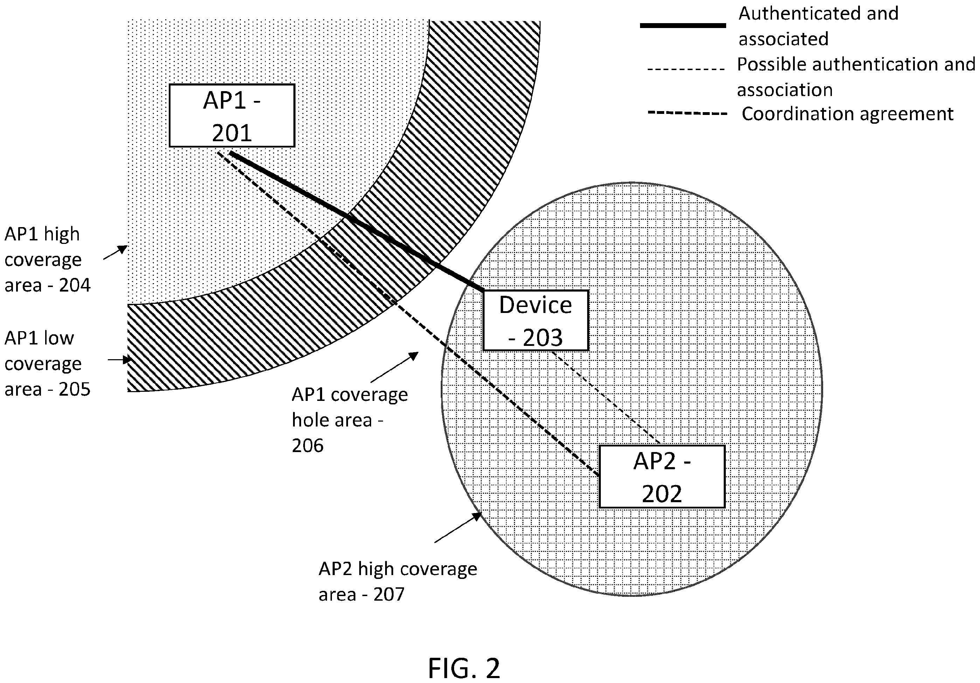

FIG. 2 depicts an example embodiment of a communication system including Wi-Fi Access Point 1 (AP1) 201, Wi-Fi Access Point 2 (AP2) 202 and device 203. AP1 201 and AP2 202 may correspond to the Wi-Fi APs 120 as depicted in FIG. 1 and may also be referred to as Wi-Fi routers. The device 203 may be one of the Wi-Fi clients 110 as depicted in FIG. 1. The device 203 may be a portable computing device that includes communication devices, including, but not limited to, the following types of devices: a mobile station (mobile phone), smartphone, personal digital assistant, handset, device using a wireless modem (alarm or measurement device, etc.), laptop and/or touch screen computer, tablet, game console, notebook, a vehicle, fixed wireless access (FWA) and multimedia device. It should be appreciated that the device 203 may also be a nearly exclusive uplink only device, of which an example is a camera or video camera loading images or video clips to a network. The device 203e may also be a device having capability to operate in Internet of Things (IoT) network which is a scenario in which objects are provided with the ability to transfer data over a network without requiring human-to-human or human-to-computer interaction.

The example embodiment shown in FIG. 2 may be located in any building, such as a house, commercial building or apartment block, or alternatively could be an outdoors location.

AP1 201 is in a first communication session with the device 203 and as such the device 203 is authenticated and associated with AP1 201. The authentication and/or association may be conducted via known mechanisms and standardized messages, for example via a probe request and response, an authentication request and response and an association request and response. AP2 202 is not currently authenticated or associated with the device 203.

Both AP1 201 and AP2 202 are in a coordination agreement. The coordination agreement may be a MAPC group. The MAPC, multi-access point coordination scheme, is due to be included in the Wi-Fi 8 for which standardization has begun and is expected to conclude in the future. As such, AP1 201 and AP2 202 may share information about associated and authenticated devices (e.g. device 203). 1). The association agreement (e.g. MAPC group) means that AP1 201 and AP2 202 can communicate with each other using MAPC-specific signaling. Further access points (not shown) may form part of the MAPC group.

AP1 201 has a high coverage area 204 which has the highest strength radio signal and a low coverage area 205 which has a lower strength radio signal. The device 203 is located in a coverage hole area 206 of AP1 201. A coverage hole of AP1 201 is an area which is not covered by AP1 201, this means that the signal strength of AP1 is not sufficiently strong enough to reach the area that the device 203 is located in. AP2 also has a high coverage area 207 that has a strong signal strength. The device 203 is located within the high coverage area 207 of AP2 202 and as such it would be desirable if the device could use AP2 202 rather than AP1 201 to provide improved service. Although, AP2 202 is not currently authenticated or associated with the device 203, the proposed apparatus and method provide a solution to allow this via the coordination agreement.

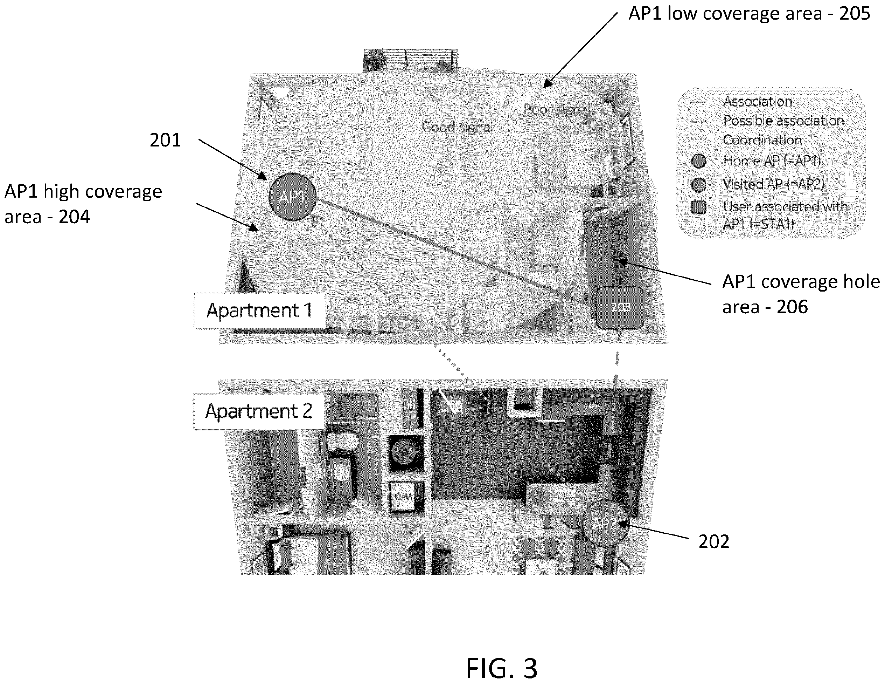

FIG. 3 shows a further example embodiment of a communication system. In FIG. 3 the example of FIG. 2 is shown as apartment block by way of demonstration. The coverage hole area 206 of AP1 201 is located in Apartment 1 where the signal strength of AP1 201 is not sufficient to reach the device 203. However, AP2 202 in Apartment 2 may have sufficient signal strength to serve the device 203 in the coverage hole.

By leveraging the advents of MAPC in Wi-Fi 8, the disclosure provided herein proposes a new coverage hole mitigation method. Through the MAPC framework, private APs are enabled to exchange and transfer users' associations among them. The proposed approach can be of high relevance in residential scenarios such as the example of FIG. 3, where multiple private APs can be leveraged to provide an overall better user experience, although the proposed approach can also be used in many other scenarios. The proposed approach may also complement mesh deployments. A mesh Wi-Fi network is composed of multiple devices that complement the functions of an access point to provide seamless connectivity to users in a larger area compared to the case with a single access point device. Mesh deployments provide a way to extend coverage and provide enhanced performance, however, the proposed approach ensures that in the case a device ends up in a coverage hole, the chances of being served by at least one AP in a coordinate agreement are significantly increased thereby preventing customer complaints.

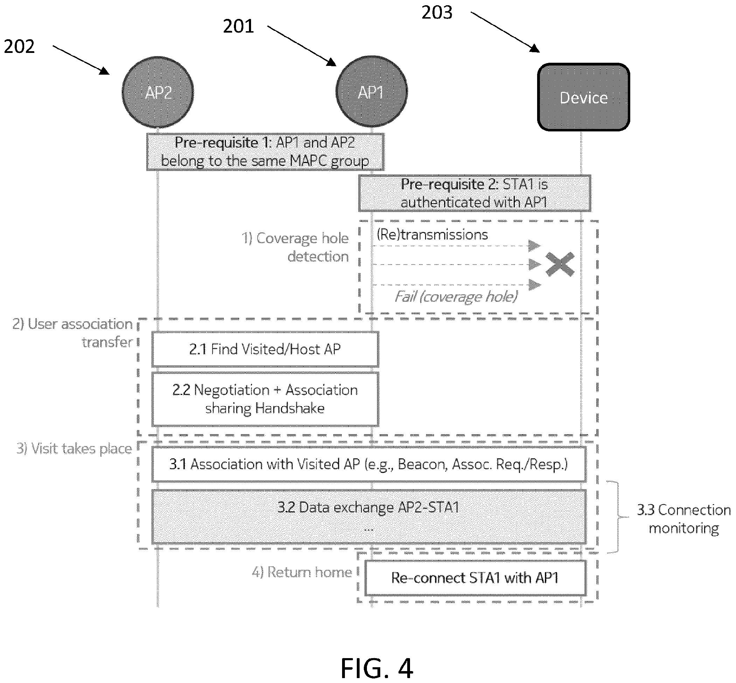

FIG. 4. shows, by way of example, an overview of the proposed coverage hole mitigation procedure between AP1 201, AP2 202 and the device 203. There are several steps in the proposed coverage hole mitigation procedure, these include Pre-requisite 1, Pre-requisite 2, Step 1 - coverage hole detect, Step 2 - user association transfer, Step 3 - visit takes place, Step 4 - return home. Each of these steps will be discussed below in turn in relation to "host AP initiated" and "visited AP initiated" coverage hole mitigation.

### Host AP initiated coverage hole mitigation.

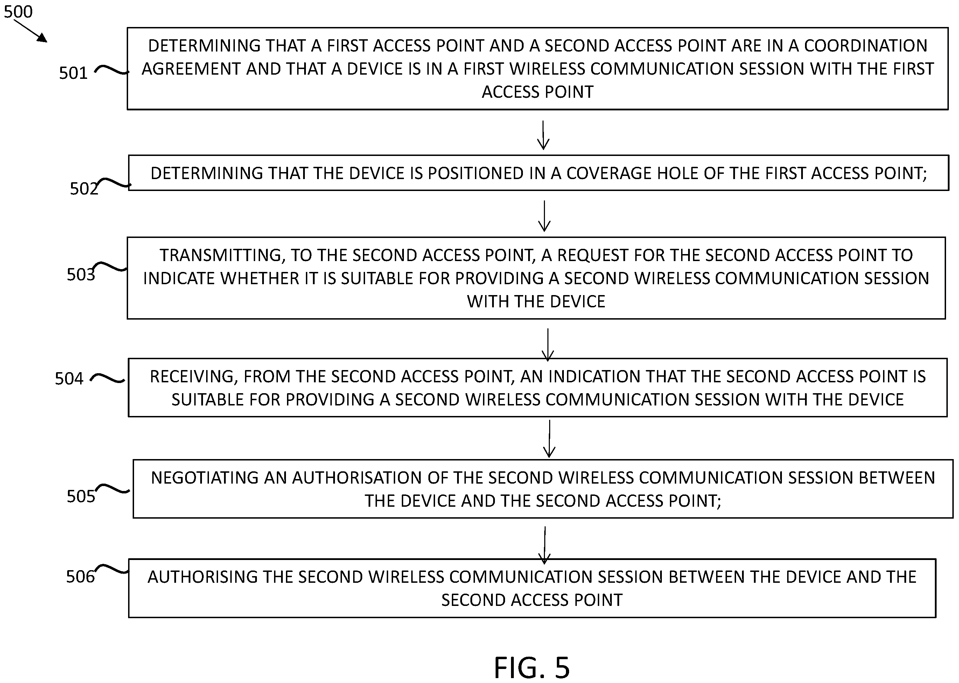

FIG. 5 shows, by way of example, a flowchart of a method 500 according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 500 may be carried out by a host AP, e.g. AP1 201. This may be referred to herein as "host AP initiated" coverage hole mitigation. This method 500 is motivated by a coverage hole detection performed at a host AP which has been previously authenticated and associated with a device 203 and is in a coordination agreement with a visited AP, e.g. AP2 202.

### Pre-requisites

The method 500 of FIG. 5 may comprise a first operation 501 of determining that a first access point, AP1, 201 and a second access point, AP2, 202 are in a coordination agreement. The first operation 501 may comprise determining that AP1 201 and AP2 202 are part of a MAPC group. In other words, the coordination agreement is a MAPC coordination agreement. This means that AP1 201 and AP2 202 can communicate with each other using MAPC-specific signaling. Determining that AP1 201 and AP2 202 are in a coordination agreement is a first prerequisite of the method 500 (for example, as shown in FIG. 4 by "Pre-requisite 1"). The first operation further comprises determining that the device 203 is in a first wireless communication session with AP1 201. The determining that the device 203 is in a first wireless session with AP1 201 may comprise determining that the device 203 is associated with AP1 201 and/or that it has been authenticated by AP1 201. As such, the device 203 is trusted by AP1 201. Determining that the device 203 is associated with AP1 201 and that is has been authenticated by AP1 201 is a second prerequisite of the method 500 (for example, as shown in FIG. 4 by "Pre-requisite 2").

### Coverage hole detection

The method 500 may comprise a second operation 502 of determining that the device 203 is positioned in a coverage hole of AP1 201. Determining that the device 203 is positioned in a coverage hole of AP1 201 may comprise performing coverage hole detection at AP1 201 by detecting whether the device 203 is detected to be away from AP1 201 for a certain period of time. For example, the coverage hole may be detected at AP1 201 if the device 203 is detected to be away from coverage for 5 seconds because no communication is received and it is not roaming. Coverage hole detection is depicted by step 1) of FIG. 4 which shows AP1 203 attempting to reach the device 203 and this not being received. AP1 201 may send multiple transmissions and/or retransmissions to the device 203 which are not received and no reply is received at AP1 201 from the device. At the point of detecting a coverage hole, the device 203 is assumed to be out of range from AP1 201 and, therefore, there is no communication between the device 203 and the AP1 201 anymore.

### User association transfer

The method 500 may comprise a third operation 503 of transmitting, to AP2 202, a request for AP2 202 to indicate whether it is suitable for providing a second wireless communication session with the device 203. The third operation 503 is used to find a suitable AP that the device 203 may visit. The request may comprise a request to indicate whether device 203 is located within a coverage range for AP2 202 and as such whether it is able to provide the second wireless communication session. AP1 201 sends the request to locate the device 203 within its neighborhood by sending a "find visited AP" message to other nearby APs. This procedure may be repeated for a maximum number of retries and/or for a specific period of time.

Upon receiving the request from AP1 201, the nearby AP2 202 that is coordinated with AP1 assesses whether the device 203 is within their coverage range. To do that, existing signaling (e.g., probing and beaconing) can be leveraged. If the device 203 is in the range of AP2 202, then AP2 202 sends a "find visited AP" reply, to the AP1 201 to indicate the presence of the device 203 within its coverage area, plus the possibility or not for AP2 202 to serve the device 203 temporarily Iin a second wireless communication session.

The method 500 may comprise a fourth operation 504 receiving, from AP2 202, an indication that AP2 202 is suitable for providing a second wireless communication session with the device. This indication is the "find visited AP" reply which is sent to the AP1 201 from AP2 202. The indication may comprise an indication that the device 203 is located within the coverage range for AP2 202. The indication may also comprise information regarding AP2's 202 capacity for hosting a second wireless communication session between the device 203 and AP2.

The third operation 503 and the fourth operation 504 relate to Step 2.1 shown in

FIG. 5 which relates to finding visited/host AP.

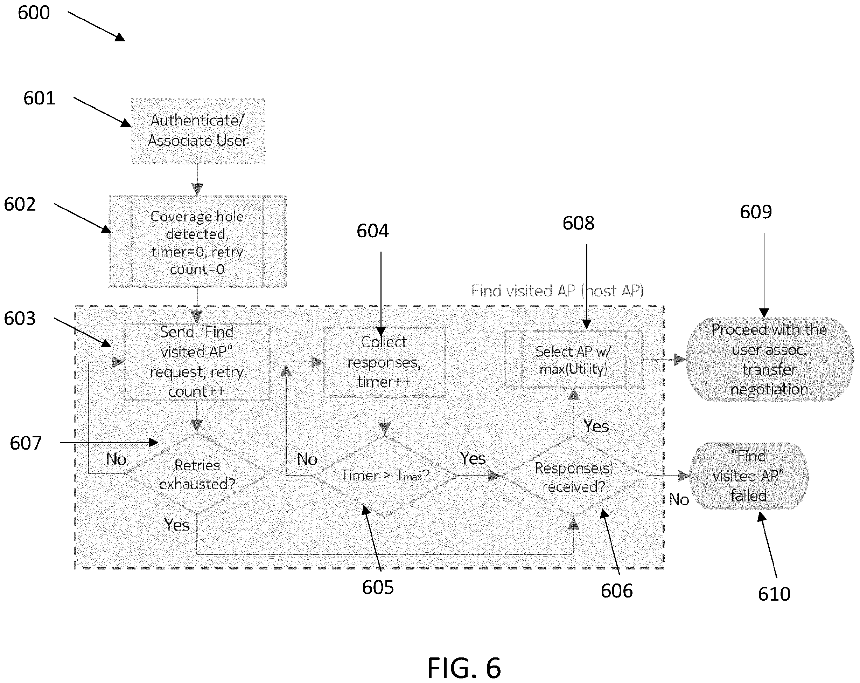

FIG. 6 shows a flowchart 600 of steps that AP1 201 may employ for sending "find visited AP" and receiving replies from potential APs that can provide the second communication session. At step 601, AP1 202 authenticates and associates with the device 203 according to the pre-requisites discussed herein. At step 602, AP1 201 detects the coverage hole for the device 203. At step 603, AP1 201 sends a "find visited AP" request to neighboring APs. For example, AP1 201 may send a broadcast message to neighboring APs that are in the same MAPC group. At step 604, a timer is employed. The timer sets a maximum duration Tₘₐₓ during which AP1 201 will continue to search for responses to the "find visited AP" request. At step 605, once the timer expires at the maximum duration Tₘₐₓ the AP1 201 proceeds to step 606 at which time AP1 201 collects replies to the "find visited AP" requests, these responses may include the "find visited AP" reply from AP2 202. At step 607, AP1 may alternatively or simultaneously continue retrying to send "find visited AP" until a predetermined amount of retries have been fulfilled. The retrying to send the "find visited AP" request can be (re)activated when necessary and according to specific implementations. For example, if the search fails, the whole procedure can be retried 1 minute after. If no valid replies are received, then at step 610 as indication is made at AP1 201 that the request to find an AP for the device 203 to visit has failed. At step 608, if at least one valid reply to the "find visited AP" request is received, then AP1 201 selects which AP should serve as the visited AP, for example, based on information received from the potential visited APs in the replies. At step 609, AP1 201 proceeds with the user association transfer and negotiation for a selected AP (e.g., AP2 202).

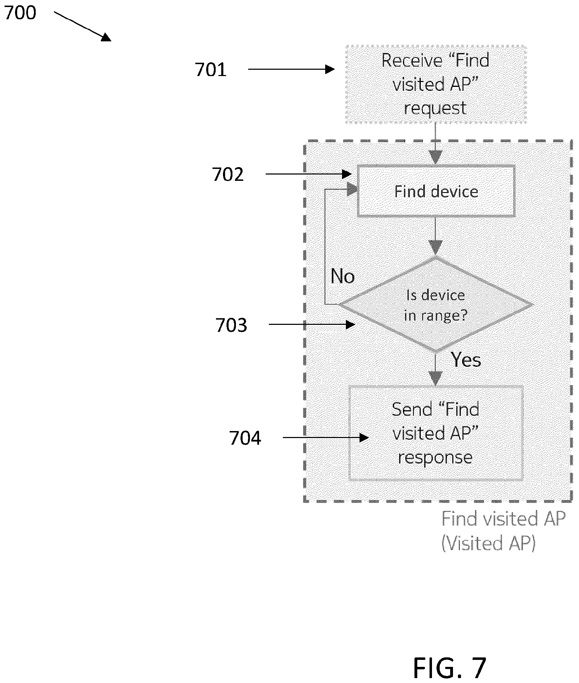

FIG. 7 shows a flowchart 700 of steps that AP2 202 may employ for sending replies to the "find visited AP" requests. FIG. 7 shows the same procedure as described in relation to FIG. 6 from the perspective of the potentially visited AP (e.g., AP2 202). At step 701, AP2 receives the "find visited AP" request (e.g. from AP1 201). At step 702, upon receiving the request, AP2 looks for the device 203, this may be achieved via conventional signaling. At step 703, AP2 202 looks to see if the device is within range such that AP2 202 could be useful for providing the second wireless communication session. Step 703 may also comprise gathering the information regarding AP2's 202 capacity for hosting a second wireless communication session between the device 203 and AP2. At step 704, AP2 202 sends the "find visited AP" response, which may then be received by AP1 201.

The information regarding AP2's 202 capacity for hosting a second wireless communication session may include at least one of the following: at least one radio band supported by AP2 202, a location of AP2 202 relative to the device 202, a received signal strength indicator, RSSI, measurement, at least one condition under which AP2 202 can host the second wireless communication session and a bandwidth allocation which can be provided by AP2 202 for hosting the second wireless communication session. This information is useful as it allows AP1 201 to determine whether AP2 202 would be a suitable AP for the device to visit in a second communication session.

The method 500 may optionally further comprise reviewing the information and determining whether to authorise the second wireless communication session based on the information. AP1 201 may assess information to ensure that a good service may be maintained for the device 203.

The method 500 may comprise a fifth operation 505 of negotiating an authorisation of the second wireless communication session between the device 203 and AP2 202.

Negotiating the authorisation of the second wireless communication session between the device 203 and AP2 202 may comprise verifying that AP2 202 is in communication with the device 203. This ensures the verifiability and truthfulness of the process via two way challenges. Verifying AP2 202 is in communication with the device 203 may comprise receiving, from AP2 202, at least one piece of information to indicate that the AP2 202 is in communication with the device 203. For example, AP1 201 may challenge the AP2 202 to ensure that it really sees the device 203. For that, AP2 202 may acquire some information from the device 203 (e.g., a key that unlocks a private secret stored by AP1 201 when hashed with the identity of the user), which, when processed by AP1, allows performing such a verification. Verifying that AP2 202 is in communication with the device may additionally and/or alternatively comprise transmitting, to AP2 202, at least one piece of information to indicate that AP2 202 is in communication with the device. AP2 202 may challenge the AP1 201 to ensure that the device 203 is really authenticated by AP1 201. AP2 202 may acquire some information from the device 203 and send it to AP1 201. When AP1 201 completes the challenge and provides a response, AP2 202 is able to verify that AP1 201 is really the host AP of the device 203. This is beneficial as no communication is required between AP1 201 and the device 203 and therefore the coverage hole can be circumvented, and a new process provided to mitigate the negative coverage effects of the coverage hole.

Negotiating the authorisation of the second wireless communication session between the device and AP2 202 may optionally comprise comparing the information received regarding AP2's 202 capacity for hosting a second wireless communication session to a threshold value and choosing to authorise the second wireless communication session, based upon determining that the information meets the threshold value. For example, AP1 201 may receive information which indicates that AP2's 202 bandwidth allocation is not sufficient to serve the device 203 and, in such a scenario, choose not to authorise the second wireless communication session as this would not provide an enhanced user experience. Alternatively, AP1 201 may receive information which indicates that AP2's 202 bandwidth allocation is sufficient to serve the device 203 and, in such a scenario, choose to authorise the second wireless communication session to mitigate the coverage hole that has been detected. AP1 201 evaluates the information to decide whether the association transfer would be effective or not from the point of view of performance goals (e.g., if the RSSI from AP2 202 at the device 203 is above a given threshold, if the load of AP2 202 is below a given threshold, the allocated bandwidth to visiting devices 203 is above a given threshold, etc.). If the validation of the previous step is positive, then AP1 sends the necessary information for the association of STA1 (i.e. device 203) to be transferred to AP2.

In some scenarios, multiple replies may be received from several different APs. In this case the election of the best AP can be done by AP1 201 by reviewing information provided from each AP. The information may be reviewed according to predetermined criteria to determine the most suitable AP for hosting the device 203 on the second wireless communication session. As such, the most suitable service provider can be selected to provide the second wireless communication session.

The method 500 may comprise a sixth operation 506 authorising the second wireless communication session between the device 203 and AP2 202. As previously discussed, this authorization may be based on the information received at AP1 201.

The fifth operation 505 and the sixth operation 506 relate to Step 2.2 shown in FIG. 4 which relates to negotiation and association sharing between AP1 and AP 202.

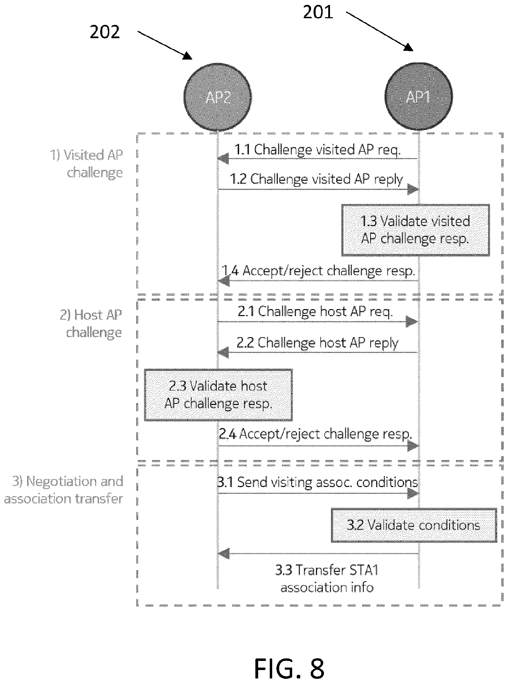

FIG. 8 shows, by way of example, an overview of the negotiation and association sharing procedure between AP1 201, AP2 202. At step 1.1, AP1 201 challenges AP2 202 and receives a reply to the challenge at step 1.2. At step 1.3, AP1 201 validates AP2's 202 response to the challenge to determine whether AP2 202 is in communication with the device 203 that is associated with AP1 201. As such, the truthfulness of the process can be verified. For example, AP2 202 may pass some public key or information from the device 203 to AP1 201. Such a public key or information (e.g. a dynamic piece of information thats cannot be reused in the future) is acquired wirelessly by AP2 202, thus confirming the presence of the device 203 within the coverage area of AP2 202. At step 1.4, the AP1 201 informs AP2 202 of its acceptance or rejectance of the challenge.

At step 2.1 of FIG.8, AP2 202 challenges AP1 201 and receives a reply to the challenge at step 2.2. At step 2.3, AP2 202 validates AP1's 201 response to the challenge to determine whether device 203 is authenticated by AP1 201. For example, AP2 202 can acquire some information from the device 203 and send it to AP1 201. At step 2.4, the AP2 202 informs AP1 201 of its acceptance or rejectance of the challenge. Steps 1.1-1.4 may be carried out independently of or simultaneously to steps 2.1-2.4. Furthermore, the negotiation and association sharing procedure may comprise only steps 1.1-1.4 or only steps 2.1-2.4 or both of steps 1.1-1.4 and steps 2.1-2.4.

At step 3.1 of FIG. 8, AP2 202 sends terms and conditions for hosting the device 203, this includes information regarding its capabilities (e.g., supported bands), its position concerning the device 203 (e.g., perceived RSSI), and the conditions under which the device 203 could be served (e.g., only 20% of the bandwidth can be allocated to visiting device 203). At step 3.2, AP1 201 validates this information to determine whether to authorise the transfer association for AP2 202 and the device 203 to commence the second wireless communication session. At step 3.3 the authorisation of the second wireless communication session between the device 203 and AP2 takes place and the transfer of the association between AP1 201 and the device 203 is transferred to an association between AP2 202 and the device 203.

### Visit takes place

Once the authorisation takes place, the second wireless communication session between AP2 202 and the device 203 takes place. The method 500 may optionally comprise determining that the second wireless communication session between the device 203 and AP2 202 has commenced, for example, by maintaining constant communication with AP2 202 to determine that it is still in contact with the device 203.

The method 500 may also optionally comprise monitoring the second wireless communication session between the device 203 and AP2 202. The second wireless communication session is monitored to ensure performance requirements are met. In that sense, both the device 203 and AP2 202 may decide to terminate the association hosting upon certain conditions are met (e.g., bad signal from the visited AP, excessive load from the visiting STA, etc.). If that is the case, standard disassociation messages are employed to terminate the visit. AP1 201 and AP2 202 may exchange some signaling to inform about the reasons of the disassociation.

The visit taking place relates to Step 3.1 to 3.3 shown in FIG. 4.

### Return home

The method 500 may also optionally comprise determining that the second wireless communication session between the device 203 and AP2 202 has been terminated. The method 500 may also optionally comprise terminating the second wireless communication session between the device 203 and AP2 202. The device 203 visiting AP2 202 must continuously monitor the channel to check if its host AP, AP1 201, is again in range.

The "return home" procedure may also comprise receiving information at AP1 201 as to why the second communication session has been terminated. This information may include reason codes for the termination and, optionally, a report/summary of the terminated communication.

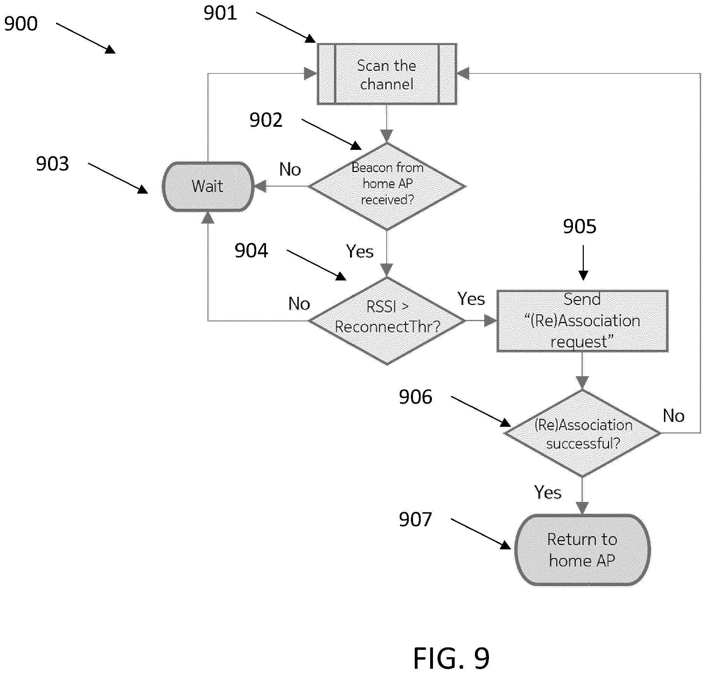

An example "return home" procedure from the device 203 side is shown in FIG. 9. FIG. 9 shows a flowchart 900 of steps that the device 203 may employ for returning home to AP1 201. At step 901, the device continues to scan the channel for a connection to AP1 201 and at step 902 awaits for a beacon received from the AP1. At step 903, if no beacon is received from AP1 201 then the device 203 continues to wait and meanwhile can maintain the second wireless communication session with AP2 202. At step 902, if a beacon is received from AP1 201 then the device 203 can optionally evaluate an RSSI measurement for the AP1 201 beacon to determine whether it is strong enough such that the first wireless communication session can be reestablished. Ideally the RSSI measurement will be strong enough such that the service is not interrupted at the device 203. Once the RSSI reaches a reconnection threshold at step 904, at step 905 a reassociation request is sent to AP1 201 to reestablish the first wireless communication session. At step 906, it is determined whether the reassociation is successful. Providing it is successful at step 907 the device 203 returns home to AP1 201, alternatively, if it is not successful the device 203 returns to the start of the flowchart 900 at step 901 to recommence the steps 901-906.

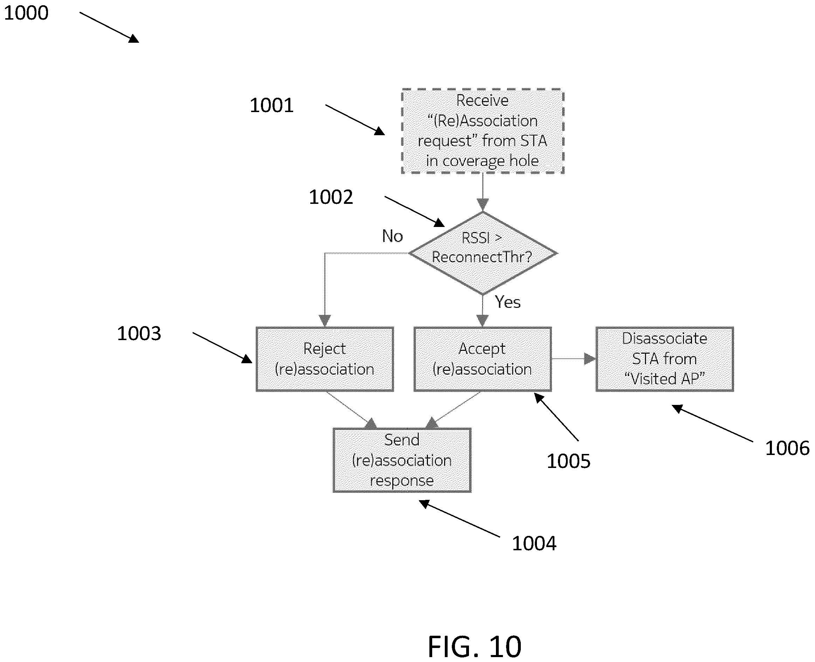

FIG. 10 shows the same procedure as described in relation to FIG. 9 from the perspective of the host AP (e.g. AP1 201). FIG. 10 shows a flowchart 1000 of the steps of the return home procedure at AP1 201. At step 1001 AP1 201 receives a reassociation request from the device 203. The reassociation request referred to herein refers to the rejoining and/or reconnecting of the device 203 to the host AP 201. At step 1002, AP1 201 also has a process for evaluating an RSSI measurement for the AP1 201 beacon to determine whether it is strong enough such that the first wireless communication session can be reestablished. If the RSSI does not meet a reconnection threshold at step 1002, the reassociation request is rejected at step 1003 and a response message is sent at step 1004 to convey this to the device 203. If the RSSI does meet a reconnection threshold at step 1002, the reassociation request is accepted at step 1005, a response message is also sent at step 1004 to convey this to the device 203 and the device 203 disassociates from the second wireless communication session and recommences the first wireless communication session.

Once the RSSI reaches a reconnection threshold at step 904, at step 905 a reassociation request is sent to AP1 201 to reestablish the first wireless communication session.

### Visited AP initiated coverage hole mitigation.

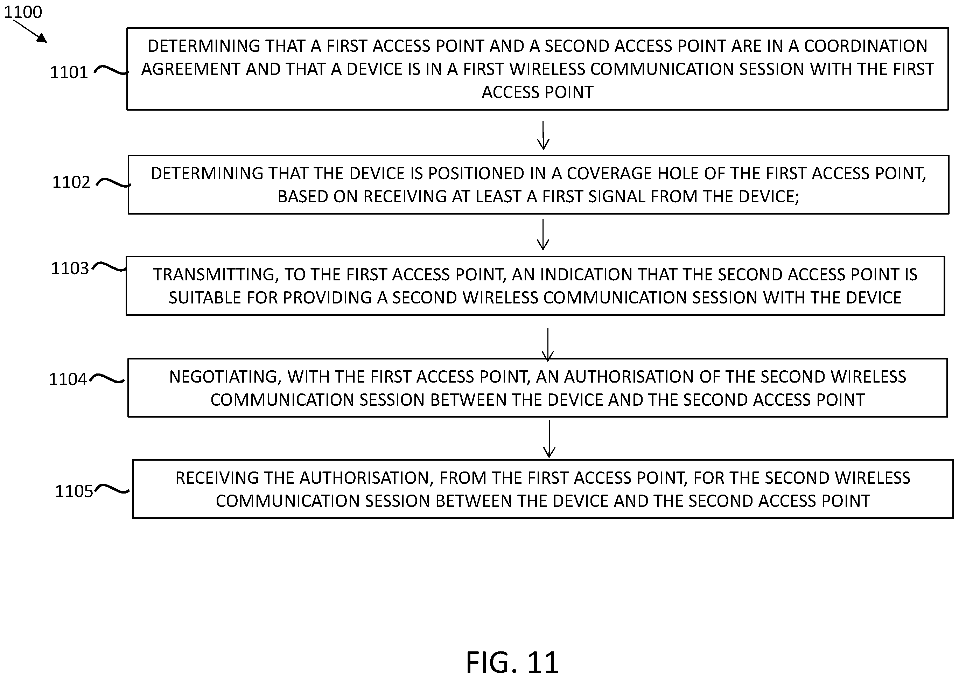

FIG. 11 shows, by way of example, a flowchart of a method 1100 according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 1100 may be carried out by a visited AP, e.g. AP2 202. This may be referred to herein as "visited AP initiated" coverage hole mitigation. This method 1100 is motivated by a coverage hole detection performed at the device 203. The visited AP that is in a coordination agreement with a host AP, e.g. AP2 201 may initiate a procedure for finding a host AP and potentially hosting the device 203 in a second wireless communication session to mitigate the coverage hole.

The steps for coverage hole mitigation laid out in FIG. 4 and discussed previously also apply to the "visited AP initiated" coverage hole mitigation procedure, including Pre-requisite 1, Pre-requisite 2, Step 1 - coverage hole detect, Step 2 - user association transfer, Step 3 - visit takes place, Step 4 - return home.

### Pre-requisites

The method 1100 may comprise a first operation 1101 of determining that AP1 201 and AP2 202 are in a coordination agreement and that the device 203 is in a first wireless communication session with AP1 201. These pre-requisites may be established in the same way as previously discussed herein in relation to FIG. 5.

In particular, determining that a first access point and a second access point are in the coordination agreement, may comprise determining that the first access point and second access point are part of a multi-access point coordination, MAPC, group. The MAPC group framework may serve the purpose of allowing the visiting AP to learn that the device 203 is in a coverage hole. As there is a MAPC framework, the device 203 can explicitly communicate to AP2 202 that it is in a coverage hole (because both devices are in the same MAPC group).

### Coverage hole detection

The method 1100 may comprise a second operation 1102 of determining that the device 203 is positioned in a coverage hole of AP1 201. Determining that the device 203 is in a coverage hole may comprise receiving at least a first signal from the device 203. AP2 202 may be informed by the device 203 that it is positioned in a coverage hole of AP1 201. The first signal from the device may comprise a probe message. The device 203 may detect a loss of connectivity with AP1 201 and detect the presence of AP2 202. For example, the coverage hole detection is performed on the device side if, for instance, a (re)association request from the device 203 to AP1 201 is timed out. AP2 202 may receive a probe request message from the device 203 to indicate that it is in a coverage hole. Determining the coverage hole may be achieved through standard beaconing and probing mechanism and coverage hole detection mechanisms.

### User association transfer

The method 110 may comprise a third operation 1103 of transmitting, to the first access point, an indication that the second access point is suitable for providing a second wireless communication session with the device. The indication that AP2 202 is suitable for providing a second wireless communication session with the device 203 may comprise an indication that the device 203 is located within the coverage range for AP2 202. The indication that AP2 202 is suitable for providing a second wireless communication session with the device 203 may comprise information regarding the AP2's 202 capacity for hosting a second wireless communication session between the device 203 and AP2 202.

The information regarding AP2's 202 capacity for hosting a second wireless communication session may include at least one of the following: at least one radio band supported by AP2 202, a location of AP2 202 relative to the device 202, a received signal strength indicator, RSSI, measurement, at least one condition under which AP2 202 can host the second wireless communication session and a bandwidth allocation which can be provided by AP2 202 for hosting the second wireless communication session. This information is useful as it allows AP1 201 to determine whether AP2 202 would be a suitable AP for the device to visit in a second communication session.

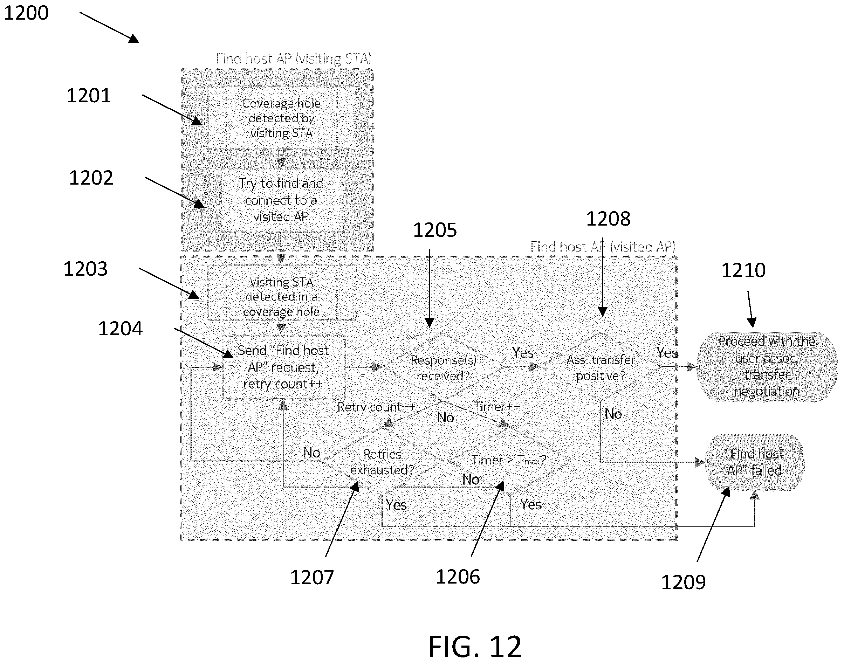

FIG. 12 shows a flowchart 1200 of steps that AP2 202 may employ for sending "find host AP" and receiving replies from the host AP that is in the first communication session with the device 203.

At step 1201, the device 203 detects the coverage hole for the device 203 in the first communication session with AP1 201 and at step 1202 the device 203 tries to find and connect to a visited AP. At step 1203, AP2 202 detects the device 203 located in the coverage hole. AP2 202 becomes aware of the device, for example, by reading its MAC address from probe request messages. AP2 202 may also receive from the device 203 an indication of the host AP. At step 1204, AP2 202 sends a "find host AP" request to neighboring APs with the aim of finding the host AP for the device 203 (e.g. in this case AP1 201). The "Find host AP" request may indicate to AP1 201 that the device 203 is within its coverage area to the pool of APs within the same pre-agreed MAPC set.

At step 1205, AP2 202 awaits a response from the host AP. At step 1206, a timer is employed. The timer sets a maximum duration Tₘₐₓ during which AP2 202 will continue to search for responses to the "find host AP" request. Once the timer expires at the maximum duration Tₘₐₓ the AP2 202 proceeds with step 1208 at which time AP2 202 collects replies to the "find host AP" requests, these responses may include the "find host AP" reply from AP2 202. After collecting the replies the visited AP2 202 determines whether an association and transfer to the second wireless communication session is possible. At step 1207, AP2 may alternatively or simultaneously continue retrying to send "find host AP" until a predetermined amount of retries have been fulfilled. If no replies are received, then at step 1209 an indication is made at AP2 202 that the request to find the host AP for the device 203 has failed. This may be communicated back to the device 203. At step 1208, if a reply to the "find host AP" request is received, then AP2 202 determines whether to proceed with the second wireless communication session based on information received from AP1 201 and/or the device 203. For example, the information may relate to the required bandwidth needed to support the device 203. At step 1210, AP2 202 proceeds with the user association transfer and negotiation with the host AP (e.g. AP1 201).

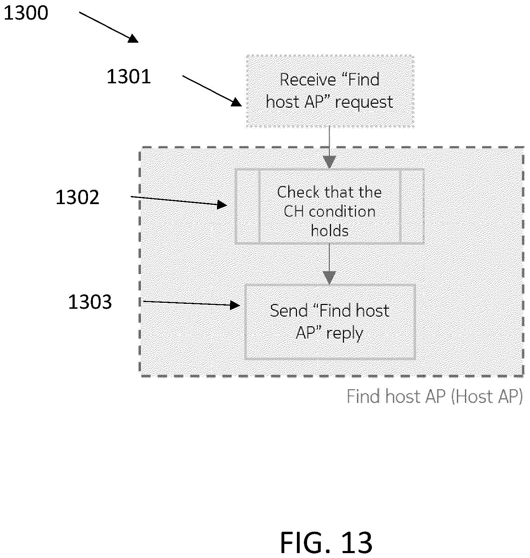

FIG. 13 shows a flowchart 1300 of steps that AP1 201 may employ for sending replies to the "find host AP" requests. FIG. 13 shows the same procedure as described in relation to FIG. 12 from the perspective of the host AP (e.g., AP1 201). At step 1301, AP1 201 receives the "find host AP" request from AP2 202. At step 1302, upon receiving the request, AP1 201 checks that the device 203 is within the coverage hole and that connection has not been reestablished. At step 1303, AP1 201 sends a reply to the "find host AP" request. If the reply is positive, the negotiation of the association transfer starts and the second wireless communication session is authorized. If the reply is negative, then the second wireless communication session will not be authorized. AP1 201 decides whether to allow the second wireless communication session between AP2 202 and the device 203 based on information received from AP2 202 in the request.

The method 1100 may comprise a fourth operation 1104 of negotiating, with AP1 201, an authorisation of the second wireless communication session between the device 203 and AP2 202. The negotiation of the authorisation may be established in the same way as previously discussed herein in relation to FIG. 5 and FIG. 8. This includes ensuring the verifiability and truthfulness of the process via two way challenges and comparing the information received regarding AP2's 202 capacity for hosting a second wireless communication session to a threshold value and choosing to authorise the second wireless communication session. As such, the method 1100 may further comprise verifying that the device is authenticated by and/or is associated with the first access point.

Verifying whether AP2 202 is in communication with the device may comprise receiving, from AP2 202, at least one piece of information to indicate that the AP2 202 is in communication with the device 203. For example, AP1 201 may challenge the AP2 202 to ensure that it really sees the device 203. For that, AP2 203 may acquire some information from the device 203 (e.g., a key that unlocks a private secret stored by AP1 201 when hashed with the identity of the user), which, when processed by AP1, allows performing such a verification. Verifying that AP2 202 is in communication with the device may additionally and/or alternatively comprise transmitting, to AP2 202, at least one piece of information to indicate that AP2 202 is in communication with the device. AP2 202 may challenge the AP1 201 to ensure that the device 203 is really authenticated by AP1 201. AP2 202 may acquire some information from the device 203 and send it to AP1 201. When AP1 201 completes the challenge and provides a response, AP2 202 is able to verify that AP1 201 is really the host AP of the device 203.

The method 1100 may comprise a sixth operation 1105 receiving the authorization, from AP1 201, of the second wireless communication session between the device 203 and AP2 202. This authorization may be based on the information received at AP1 201.

### Visit takes place

Once the authorisation takes place, the second wireless communication session between AP2 202 and the device 203 takes place. The method 1100 may optionally comprise commencing the second wireless communication session between the device and second access point.

The method 1100 may also optionally comprise monitoring the second wireless communication session between the device 203 and AP2 202, at AP2 202. The second wireless communication session is monitored to ensure performance requirements are met. In that sense, both the device 203 and AP2 202 may decide to terminate the association hosting upon certain conditions being met (e.g., bad signal from the visited AP, excessive load from the visiting STA, etc.). If that is the case, standard disassociation messages are employed to terminate the visit. Disassociation messages may include signaling to communicate the reason of a given disassociation, such reasons can, for example, include at least one of the following: the device 203 disappears, the wireless signal is weakI, the bandwidth allocated is not enough.

The visiting taking place may be established in the same way as previously discussed herein in relation to FIG. 5.

### Return home

The method 1100 may also optionally comprise terminating the second wireless communication session between the device 203 AP2 202. The device 203 visiting AP2 202 must continuously monitor the channel to check if its host AP, AP1 201, is again in range.

The method 1100 may optionally comprise receiving, from the AP1 201 and/or the device 203, a disassociation request to end the second wireless communication session and ending the second wireless communication session between the device 203 and AP2 202.

The return home procedure may be established in the same way as previously discussed herein in relation to FIG. 5, FIG. 9 and FIG. 10.

### Device perspective on coverage hole mitigation

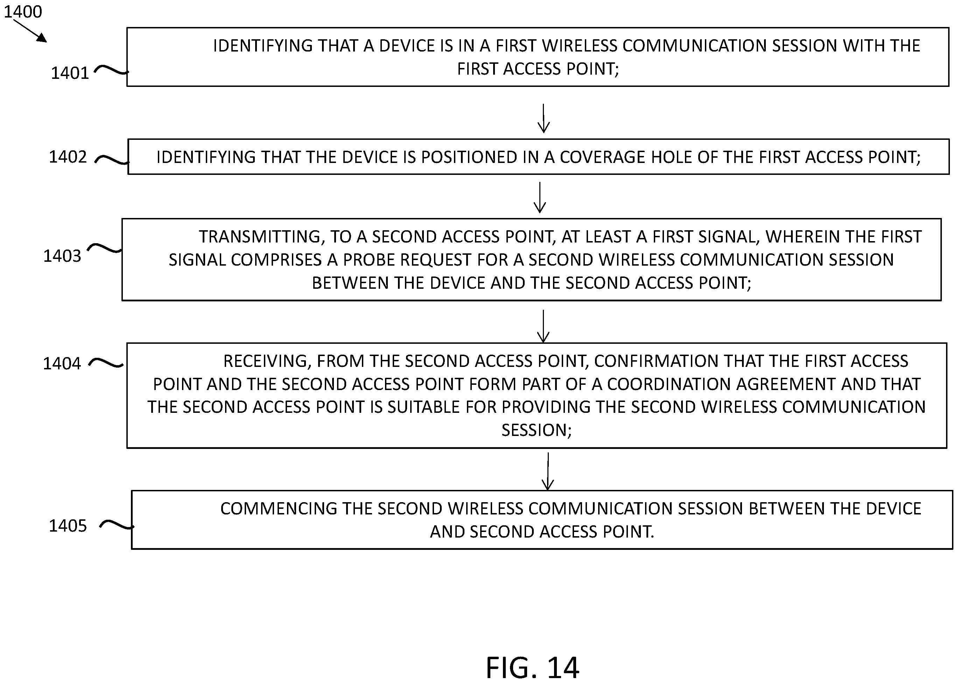

For completeness, the device 203 perspective on coverage hole mitigation is provided below in relation to FIG. 14.

FIG. 14 shows, by way of example, a flowchart of a method 1400 according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 1400 may be carried out by the device 203.

The method 1400 may comprise a first operation 1401 of identifying that the device is in a first wireless communication session with AP1 201.

The method 1400 may comprise a second operation 1402 of identifying that the device 203 is positioned in a coverage hole of AP1 201. This may be established by determining that no signals are received from AP1 201.

The method 1400 may comprise a third operation 1403 of transmitting, to AP2 202, at least a first signal. The first signal may comprise a probe request for a second wireless communication session between the device and the second access point.

The method 1400 may comprise a fourth operation 1404 of receiving, from the second access point, confirmation that AP1 201 and AP2 202 form part of a coordination agreement and that AP2 202 is suitable for providing the second wireless communication session.

The method 1400 may comprise a fifth operation 1405 of commencing the second wireless communication session between the device 203 and AP2 202.

The method 1400 may optionally comprise monitoring whether the device is still positioned in a coverage hole of the AP1 201, by scanning to receive a least one signal from the AP1 201; and sending an association or reassociation request from the device 203 to AP1 201.

An advantage of all the proposed solutions discussed herein is that the device 203 does not need to authenticate itself with AP2 202 by virtue of this method because both the AP1 201 and AP2 202 form part of the coordination agreement (e.g. MACP group) where the device 203 is trusted by AP1 201 as the host AP. This saves operational and computing resources as unnecessary security and authorisation procedures are not required to use AP2 202 to mitigate the coverage hole.

### Example Apparatus

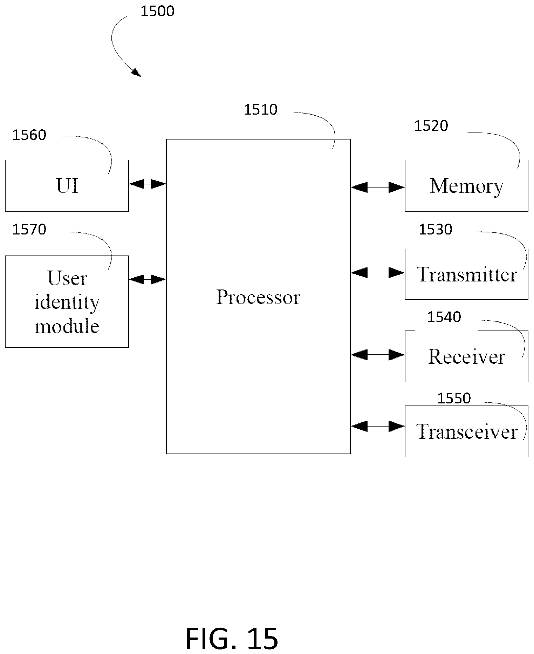

FIG. 15 shows, by way of example, a block diagram of an apparatus capable of performing the method(s) as disclosed herein. Illustrated is device 1500, which may comprise, for example, a mobile communication device such as AP1 201 and/or AP2 202 and/or device 203 of FIG. 2. Comprised in device 1500 is processor 1510, which may comprise, for example, a single- or multi-core processor wherein a single-core processor comprises one processing core and a multi-core processor comprises more than one processing core. Processor 1510 may comprise, in general, a control device. Processor 1510 may comprise more than one processor. Processor 1510 may be a control device. A processing core may comprise, for example, a Cortex-A8 processing core manufactured by ARM Holdings or a Steamroller processing core designed by Advanced Micro Devices Corporation. Processor 1510 may comprise at least one Qualcomm Snapdragon and/or Intel Atom processor. Processor 1510 may comprise at least one application-specific integrated circuit, ASIC. Processor 1510 may comprise at least one field-programmable gate array, FPGA. Processor 1510 may be means for performing method steps in device 1500. Processor 1510 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 1500 may comprise memory 1520. Memory 1520 may comprise random-access memory and/or permanent memory. Memory 1520 may comprise at least one RAM chip. Memory 1520 may comprise solid-state, magnetic, optical and/or holographic memory, for example. Memory 1520 may be at least in part accessible to processor 1510. Memory 1520 may be at least in part comprised in processor 1510. Memory 1520 may be means for storing information. Memory 1520 may comprise computer instructions that processor 1510 is configured to execute. When computer instructions configured to cause processor 1510 to perform certain actions are stored in memory 1520, and device 1500 overall is configured to run under the direction of processor 1510 using computer instructions from memory 1520, processor 1510 and/or its at least one processing core may be considered to be configured to perform said certain actions. Memory 1520 may be at least in part external to device 1500 but accessible to device 1500.

Device 1500 may comprise a transmitter 1530. Device 1500 may comprise a receiver 1540. Transmitter 1530 and receiver 1540 may be configured to transmit and receive, respectively, information in accordance with at least one cellular or non-cellular standard. Transmitter 1530 may comprise more than one transmitter. Receiver 1540 may comprise more than one receiver. Transmitter 1530 and/or receiver 1540 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 1500 may comprise user interface, UI, 1560. UI 1560 may comprise at least one of a display, a keyboard, a touchscreen, a vibrator arranged to signal to a user by causing device 1500 to vibrate, a speaker and a microphone.

Device 1500 may comprise or be arranged to accept a user identity module 1570. User identity module 1570 may comprise, for example, a subscriber identity module, SIM, card installable in device 1500. A user identity module 1570 may comprise information identifying a subscription of a user of device 1500. A user identity module 1570 may comprise cryptographic information usable to verify the identity of a user of device 1500 and/or to facilitate encryption of communicated information and billing of the user of device 1500 for communication effected via device 1500.

Processor 1510 may be furnished with a transmitter arranged to output information from processor 1510, via electrical leads internal to device 1500, to other devices comprised in device 1500. Such a transmitter may comprise a serial bus transmitter arranged to, for example, output information via at least one electrical lead to memory 1520 for storage therein. Alternatively to a serial bus, the transmitter may comprise a parallel bus transmitter. Likewise processor 1510 may comprise a receiver arranged to receive information in processor 1510, via electrical leads internal to device 1500, from other devices comprised in device 1500. Such a receiver may comprise a serial bus receiver arranged to, for example, receive information via at least one electrical lead from receiver 1540 for processing in processor 1510. Alternatively to a serial bus, the receiver may comprise a parallel bus receiver.

Processor 1510, memory 1520, transmitter 1530, receiver 1540, NFC transceiver 1550, UI 1560 and/or user identity module 1570 may be interconnected by electrical leads internal to device 1500 in a multitude of different ways. For example, each of the aforementioned devices may be separately connected to a master bus internal to device 1500, to allow for the devices to exchange information. However, as the skilled person will appreciate, this is only one example and depending on the embodiment various ways of interconnecting at least two of the aforementioned devices may be selected.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered mere embodiments. However, it should be noted that the description of these embodiments is given by way of example only and that various modifications may be made without departing from the scope as defined by the appended claims.

## Claims

1. An apparatus, comprising:
means for determining that a first access point and a second access point are in a coordination agreement and that a device is in a first wireless communication session with the first access point;
means for determining that the device is positioned in a coverage hole of the first access point;
means for transmitting, to the second access point, a request for the second access point to indicate whether it is suitable for providing a second wireless communication session with the device;
means for receiving, from the second access point, an indication that the second access point is suitable for providing a second wireless communication session with the device;
means for negotiating an authorisation of the second wireless communication session between the device and the second access point; and
means for authorising the second wireless communication session between the device and the second access point.

2. The apparatus of claim 1, wherein the apparatus is the first access point.

3. The apparatus of any preceding claim, wherein the means for determining that a first access point and a second access point are in the coordination agreement, comprises means for determining that the first access point and second access point are part of a multi-access point coordination, MAPC, group.

4. The apparatus of any preceding claim,
wherein the request for the second access point to indicate whether it is suitable for providing a second wireless communication session with the device comprises a request to indicate whether device is located within a coverage range for the second access point; and/or
wherein the indication that the second access point is suitable for providing a second wireless communication session with the device comprises an indication that the device is located within the coverage range for the second access point.

5. The apparatus of any preceding claim, wherein
the indication that the second access point is suitable for providing a second wireless communication session with the device, comprises information regarding the second access point's capacity for hosting a second wireless communication session between the device and the second access point.

6. The apparatus of claim 5, wherein the information regarding the second access point's capacity for hosting a second wireless communication session comprises at least one of the following:
at least one radio band supported by the second access point;
a location of the second access point relative to the device;
a received signal strength indicator, RSSI, measurement;
at least one condition under which the second access point can host the second wireless communication session;
a bandwidth allocation which can be provided by the second access point for hosting the second wireless communication session.

7. The apparatus of any of claims 5 to 6, wherein the means for negotiating the authorisation of the second wireless communication session between the device and the second access point comprises;
means for comparing the information received regarding the second access point's capacity for hosting a second wireless communication session to a threshold value; and
means for authorising, upon determining that the information meets the threshold value, the second wireless communication session.

8. An apparatus, comprising:
means for determining that a first access point and a second access point are in a coordination agreement and that a device is in a first wireless communication session with the first access point;
means for determining that the device is positioned in a coverage hole of the first access point, based on receiving at least a first signal from the device;
means for transmitting, to the first access point, an indication that the second access point is suitable for providing a second wireless communication session with the device;
means for negotiating, with the first access point, an authorisation of the second wireless communication session between the device and the second access point; and
means for receiving the authorisation, from the first access point, for the second wireless communication session between the device and the second access point.

9. The apparatus of claim 8, wherein the apparatus is the second access point.

10. The apparatus of claims 8 or 9, wherein the at least first signal comprises a probe request message.

11. The apparatus of any of claims 8 to 10, wherein the indication that the second access point is suitable for providing a second wireless communication session with the device comprises an indication that the device is located within the coverage range for the second access point.

12. The apparatus of any of claims 8 to 11, wherein the indication that the second access point is suitable for providing a second wireless communication session with the device comprises information regarding the second access point's capacity for hosting a second wireless communication session between the device and the second access point.

13. An apparatus, comprising:
means for identifying that a device is in a first wireless communication session with the first access point;
means for identifying that the device is positioned in a coverage hole of the first access point;
means for transmitting, to a second access point, at least a first signal,
wherein the first signal comprises a probe request for a second wireless communication session between the device and the second access point;
means for receiving, from the second access point, confirmation that the first access point and the second access point form part of a coordination agreement and that the second access point is suitable for providing the second wireless communication session; and
means for commencing the second wireless communication session between the device and second access point.

14. The apparatus of claim 13, wherein the apparatus is the device.

15. The apparatus of any of claims 13 or 14, further comprising:
means for monitoring whether the device is still positioned in a coverage hole of the first access point, comprising means for scanning to receive a least one signal from the first access point; and
means for sending an association or reassociation request from the device to the first access point.
